# EUROPEAN PATENT APPLICATION

(11) **EP 4 068 647 A1**
(43) Date of publication of application: **05.10.2022**
(21) Application number: 21199747.3
(22) Date of filing: 29.09.2021
(51) Int. Cl.: H04B 7/155, H04W 28/08, H04W 84/18, H04W 92/20

(54) **INTEGRATED WIRELESS ACCESS BACKHAUL DEVICE FOR NETWORK DENSIFICATION USING MESH NETWORK**

(30) Priority: 31.03.2021 IN 202111012583
(71) Applicant: Sterlite Technologies Limited, Haryana 122002 (IN)
(72) Inventor: KUMAR, Nitesh, 122002 Haryana (IN); NANDWANA, Rishi, Orinda, CA 94563 (US); GANGADHAR, Rajesh, Dublin, CA 94568 (US); MANNA, Tanumay, 122002 Haryana (IN)
(74) Representative: Hepworth Browne

(57) **Abstract**

The present invention provides an integrated wireless access backhaul device (100) for network densification using a mesh network includes at least one integrated access and backhaul module (102) with a first backhaul interface (104) using one optical wireless communication links, a second backhaul interface (106) using V-band links, an access interface (108) providing a radio link to a user equipment and a switch fabric (110) to transfer data between the first backhaul interface (104), the second backhaul interface (106) and the access interface (108) in real-time.

## Description

### TECHNICAL FIELD

Embodiments of the present invention relate to a field wireless communication system. And more particularly, relates to an integrated wireless access backhaul device for network densification using a mesh network.

The present application claims the benefit of Indian Application No. 202111012583. titled "Integrated Wireless Access Backhaul Device for Network Densification Using Mesh Network" filed by the applicant on 23rd March 2021, which is incorporated herein by reference in its entirety.

### Background Art

In recent times, mobile network usage is growing at an exponential rate of 42% CAGR (Compound annual growth rate) worldwide and 73% CAGR in India. MNOs (Mobile network operators) and ISP's (Internet service provider) are looking for ways to increase network capacity and reduce network deployment complexity. There are several techniques that MNOs/ISP's use to add capacity to their wireless network.

In one technique, MNOs/ISP's make their network dense by adding more cell sites while reusing available spectrum. In another technique, MNOs/ISP's increase their fibre reach.

In yet another technique, MNOs/ISP's buy more spectrum. In yet another technique, MNOs/ISP's make spectrum utilization more efficient by optimizing spectral efficiency. Although, over the last two decades, there is much research and development work addressing the corresponding challenges from RAN (Radio Access Network) perspective (e.g., new spectrum exploration, carrier aggregation, massive multiple-input-multiple-output, and inter-cell interference mitigation techniques, Multi beam antenna) but still these techniques are proven to provide incremental benefits and not able to cater mammoth network usage requirement. Hence, Network densification has now become the preferred choice of MNOs as it relates to high user experience.

Most of the Tier 1 and Tier 2 cities of the world are experiencing very low throughput although they are residing within 400m of the macro site either because of high network congestion although served by good signal strength or having low signal strength because of physical blockage of signal due to buildings or complex residence structure.

Realization of network densification in recent scenarios is happening only by deploying low power 4G/5G-NR cells or Wi-Fi hotspots to the locations where user experience is very low. Hence, network densification is not happening at a true pace and network usage is growing tremendously. Currently, there are no significant technologies available which could provide a true user experience at a desired location. Some of the prior art references are given below:

U.S. patent application "US10397803B2" discloses a method involving steps of receiving from a candidate node configured for millimetre wave communication, a request to join the mm Wave mesh network. A mesh neighbour candidate list associated with the candidate node is transmitted to the candidate node. According to the mesh neighbour candidate list, the candidate node is tested for conformance with the mmWave mesh network. If the testing indicates that the candidate node conforms with the mmWave mesh network, the candidate node is joined to the mmWave mesh network.

Another U.S. patent application "US20190261262A1" discloses a node which has free space optical (FSO) terminals for transmitting data to a remote node over a free space optical link. A radio frequency (RF) terminal transmits data to the remote node over a free space RF link, where the free space optical link and the free space RF link are connected together to form a hybrid wireless link between the local node and the remote node. Switches/controllers are coupled to the FSO terminal and the RF terminal. The switch/controller receives data to determine a data link layer to transmit data frames over the free space optical link and the free space RF link based on content of the data frames to steer to the FSO terminal and the RF terminal.

Yet another U.S. patent application "US10383136B2" discloses a method which involves determining first direction of backhaul link traffic between two scheduling entities. Second direction of access link traffic between a scheduling entity and a user equipment is determined based on the first direction of the backhaul link traffic. The access link traffic in the second direction is transmitted or received for utilizing transmission resources of the backhaul link traffic from the scheduling entity. The second direction to be uplink or downlink is determined to reduce interference to the backhaul link traffic.

WIPO patent application "WO2019192607A1" discloses a method which involves receiving a data packet by an integrated access and backhaul (IAB) node (AA). The data packet is transmitted to an IAB donor (EE) by the IAB node. The first IAB node is utilized to obtain routing related information. The data packet is sent to the IAB node according to the route-related information. The data packet is received from a user equipment by the IAB node. The data packet is received from an application by the IAB node, where the data packet is user plane data or control plane signaling.

The above-mentioned prior arts cover various approaches and mesh-based networks with joint access and backhaul link design using millimeters wave and optical wireless communication.

However, none of the cited prior art discloses any significant considerations to optimize mesh-based network/links of single box devices, having integrated access backhaul capability in real-time for traffic management in 4G/5G-NR/Wi-Fi/IOT.

In light of the above-stated discussion, there is an urgent need for a technical solution that overcomes the above stated limitations in the prior arts and addressing above hardware constraints.

Thus, the present invention provides an integrated wireless access backhaul device for network densification using a mesh network.

### SUMMARY OF THE INVENTION

An embodiment of the present invention relates to an integrated wireless access backhaul device for network densification using a mesh network. In particular, the integrated wireless access backhaul device includes at least one integrated access and backhaul module. The at least one integrated access and backhaul module includes a first backhaul interface, a second backhaul interface using at least one V-band link, an access interface and a switch fabric.

According to a first aspect, the first backhaul interface uses at least one optical wireless communication link. In particular, at least one optical wireless communication link includes one or more of free space communication, wireless point to point communication and satellite communication.

In accordance with an embodiment of the present invention, the access interface provides at least one radio link to a plurality of user equipment.

In accordance with an embodiment of the present disclosure,

According to a second aspect, the switch fabric transfers data between the first backhaul interface, the second backhaul interface and the access interface in real-time.

In accordance with an embodiment of the present disclosure, the integrated wireless access backhaul device includes a power control unit. In particular, the power control unit is configured to control transmission power of the first backhaul interface and the second backhaul interface based on traffic load at the first backhaul interface and the second backhaul interface.

According to a third aspect, the integrated wireless access backhaul device provides a high bandwidth intelligent backhaul transportation by combining the at least one optical wireless communication link and the at least one V-band link of the integrated wireless access backhaul device with another integrated wireless access backhaul device. Particularly, combining at least one optical wireless communication link and at least one V-band link creates a mesh network of multiple communication links. And, the mesh network provides a high bandwidth using the multiple communication links for intelligent backhaul transportation.

In accordance with an embodiment of the present disclosure, the integrated wireless access backhaul device enables an intelligent load balancing over the first backhaul interface and the second backhaul interface. Particularly, the intelligent load balancing facilitates switching of the traffic load over the first backhaul interface and the second backhaul interface based on bandwidth availability.

According to the fourth aspect of the disclosure, the integrated wireless access backhaul device performs one or more actions/operations. In particular, one or more actions/operations include selecting an optimized interface, combining the first backhaul interface, the second backhaul interface and the access interface and sending a prioritized traffic on the optimized interface. Moreover, the one or more actions/operations include real-time traffic management through switching the traffic load and duplicating the prioritized traffic over the first backhaul interface and the second backhaul interface.

According to the fourth aspect of the disclosure, the controlling device is configured for providing the real-time traffic management in the mesh network of a plurality of integrated wireless access backhaul devices. In particular, each of the plurality of integrated wireless access backhaul devices includes at least one backhaul interface, the access interface and the switch fabric to transfer the data between the at least one backhaul interface and the access interface. Moreover, each of the plurality of integrated wireless access backhaul devices is connected with each other through the mesh network.

In accordance with an embodiment of the present invention, the controlling device further includes a plurality of aggregation links, a receiving module and a controlling module. In particular, each of the plurality of aggregation links connects the controlling device with each of the plurality of integrated wireless access backhaul devices. The receiving module is configured to receive information associated with traffic from each of the plurality of integrated wireless access backhaul devices. And, the controlling module is configured to monitor an incoming traffic and mapping the incoming traffic to at least one backhaul interface based on received information associated with the traffic.

In accordance with an embodiment of the present invention, the controlling device additionally includes a connection module configured for automatically connecting the controlling device with a network management system.

In accordance with another embodiment of the present invention, the controlling device includes two backhaul interfaces and a load balancing module configured for balancing the traffic load between the two backhaul interfaces.

According to the fifth aspect of the disclosure, the mesh network is operably configured to connect the plurality of integrated wireless access backhaul devices. Each of the plurality of integrated wireless access backhaul devices provides the first backhaul interface, the second backhaul interface, an access interface and a switch fabric to transfer the data between the first backhaul interface, the second backhaul interface and the access interface. And, the first backhaul interface uses at least one optical wireless communication link and the second backhaul interface uses at least one V-band link.

In accordance with an embodiment of the present invention, the mesh network includes a first plurality of links, a second plurality of links and a third plurality of links. In particular, the first plurality of links connects the first backhaul interface of each of the plurality of integrated wireless access backhaul devices with each other. Moreover, the second plurality of links connects the second backhaul interface of each of the plurality of integrated wireless access backhaul devices with each other. Further, the third plurality of links connects each of the plurality of integrated wireless access backhaul devices with the controlling device.

In accordance with an embodiment of the present invention, the mesh network creates a plurality of integrated access and backhaul nodes enabling one or more radio access technologies.

Additionally, the mesh network includes a link bonding module configured to combine at least two links from the first plurality of links, the second plurality of links and the third plurality of links for efficient traffic handling.

According to the sixth aspect of the disclosure, method for providing a real-time traffic management in a mesh network of a plurality of integrated wireless access backhaul devices includes steps of bonding at least two links of a first plurality of links, a second plurality of links and a third plurality of links originating from each of a plurality of integrated access and backhaul nodes for balancing traffic load over a plurality of paths terminating at a core network, adaptively selecting either of a first backhaul interface or the second backhaul interface based on priority intelligence and signal-to-interference-plus-noise ratio (SINR) of a receiving module, assigning an incoming traffic in one or more quality of service enabled queues and performing one or more actions/operations associated with a plurality of parameters while satisfying quality of service constraints.

In accordance with an embodiment of the present invention, the method comprises controlling transmission power of the first backhaul interface and the second backhaul interface based on the traffic load at the first backhaul interface and the second backhaul interface for controlling excess radiation and thereby reducing interference.

In accordance with an embodiment of the present invention, the plurality of parameters comprising transmission power, bandwidth, sub-channel assignment, bit-loading and type of one or more radio access technologies.

In accordance with an embodiment of the present invention, the method is operably configured to perform one or more actions selected from selecting an optimized interface, combining the first backhaul interface, the second backhaul interface and an access interface for high throughput, sending a prioritized traffic on the optimized interface, the real-time traffic management through switching the traffic load over the first backhaul interface, the second backhaul interface, and the access interface and duplicating the prioritized traffic over the first backhaul interface and the second backhaul interface by transmitting the prioritized traffic on both the interfaces simultaneously.

In accordance with an embodiment of the present invention, the method comprises enabling an intelligent load balancing over the first backhaul interface and the second backhaul interface to facilitate switching of traffic load over the first backhaul interface and the second backhaul interface based on bandwidth availability.

According to the seventh aspect of the disclosure, the integrated wireless access backhaul device effectively attains high throughput in a backhaul.

According to the eighth aspect of the disclosure, the integrated wireless access backhaul device allows optimal performance using artificial intelligence enabled predictive adaptation.

These and other aspects herein will be better appreciated and understood when considered in conjunction with the following description and the accompanying drawings. It should be understood, however, that the following descriptions are given by way of illustration and not of limitation.

According to the foregoing solutions, are attained by employing an integrated wireless access backhaul device for network densification using a mesh network and method thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a block diagram illustrating an integrated wireless access backhaul device in accordance with an embodiment of the present invention;
Fig. 2 is a pictorial representation illustrating a layered architecture of the integrated wireless access backhaul device in accordance with an embodiment of the present invention;
Fig. 3 is a pictorial representation illustrating a first exemplary mesh network to connect a plurality of integrated wireless access backhaul device in accordance with an embodiment of the present invention;
Fig. 4 is a pictorial representation illustrating a second exemplary mesh network to connect the plurality of integrated wireless access backhaul device in accordance with an embodiment of the present invention;
FIG. 5 is a flow-chart illustrating a method for providing real-time traffic management in a mesh network of a plurality of integrated wireless access backhaul device in accordance with an embodiment of the present invention.

### REFERENCE LIST

Integrated Wireless Access Backhaul Device 100
Integrated Access and Backhaul Module 102
First Backhaul Interface 104
Second Backhaul Interface 106
Access Interface 108
Switch Fabric 110
Layered Architecture 200
First Exemplary Mesh Network 300
Second Exemplary Mesh Network 400
Controlling Device 302

The method and device are illustrated in the accompanying drawings, throughout which like reference letters indicate corresponding parts in the various figures.

It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

**Following terms shall apply throughout the present disclosure:**
Optical wireless communication (OWC) technology is a form of optical communication in which unguided visible, infrared (IR), or ultraviolet (UV) light is used to carry a signal.
And, the optical wireless communication (OWC) technology is used in short-range communication.

In general, optical wireless communications is an optical communication that uses unguided visible infrared or ultraviolet light to carry a signal. In addition, the optical wireless communications operate in a visible band. Further, the visible band is in a range of about 390 nanometres to 750 nanometres. Furthermore, optical wireless communications are referred to as visible light communication (VLC). Moreover, the optical wireless communications operate in unlicensed bands.

V-band is a standard designation by the Institute of Electrical and Electronics Engineers (IEEE) for a band of frequencies in the microwave portion of the electromagnetic spectrum ranging from 40 to 75 gigahertz (GHz).

In general, V-band corresponds to the designated range of frequencies of the electromagnetic spectrum. In addition, the V-band is actively used in millimetre wave communication systems. Further, the V-band operates in an unlicensed band. Furthermore, the V-band operates within a distance range of about 400 meters to 500 meters. Moreover, the V-band is actively used in wireless broadband.

The V-band link, which operates in the frequency band range of about 57 Gigahertz to 64 Gigahertz may attain a capacity of 2Gbps for a distance limit of about 1 Kilometre. Additionally, the distance limit is due to absorption of signals by oxygen in the atmosphere. Further, the V-band technology may connect up to 8 terminal units in Point-to-Multipoint setup, which may be useful for short links of about 200 metres. Furthermore, the V-band technology has a specific propagation characteristic known as oxygen resonance peak, that provides an excellent mechanism to combat interference using pencil beams.

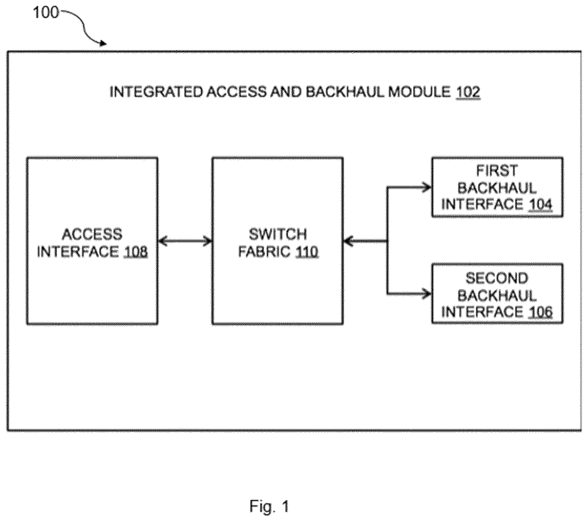

Fig. 1 is a block diagram illustrating an integrated wireless access backhaul device in accordance with an embodiment of the present invention. In particular, the integrated wireless access backhaul device 100 includes at least one integrated access and backhaul module 102. And, at least one integrated access and backhaul module 102 further includes a first backhaul interface 104, a second backhaul interface 106, an access interface 108 and a switch fabric 110. The above stated elements of the integrated wireless access backhaul device 100 operate coherently and synchronously for network densification using a mesh network.

In accordance with an embodiment of the present invention, the integrated access and backhaul device 100 includes mobile termination function communicating as access user equipment with parent node device, and distributed unit component communicating as backhaul device with slave node device.

In an implementation, the number of backhaul interfaces used for at least one integrated access and backhaul module 102 is two. Alternatively, the number of the backhaul interfaces may vary.

In accordance with an embodiment of the present invention, at least one integrated access and backhaul module 102 has an intelligent hybrid combination of optical wireless communication (OWC) technology and V-band technology.

In accordance with an embodiment of the present invention, at least one integrated access and backhaul module 102 includes the first backhaul interface 104 using at least one optical wireless communication (OWC) link. Subsequently, the first backhaul interface 104 is based on the optical wireless communication (OWC) technology.

Alternatively, the first backhaul interface 104 is based on any wireless communication technique of the like.

In accordance with an embodiment of the present invention, at least one optical wireless communication link includes one or more of a free space communication, wireless point to point communication, satellite communication and the like.

In accordance with an embodiment of the present invention, the optical wireless communication (OWC) technology may attain data rate of about 2Gbps for a distance limit of up to 1 kilometre. And, the distance limit is primarily due to the divergent nature of light emitting diodes. Additionally, the divergent nature is significant from an aspect of multi-point connectivity.

In accordance with an embodiment of the present invention, at least one integrated access and backhaul module 102 includes the second backhaul interface 106 using at least one V-band link. The second backhaul interface 106 is based on the V-band technology. Alternatively, the second backhaul interface 106 is based on any of the wireless communication techniques of the like. At least one V-band link operates in a frequency band range of about 57 Gigahertz to 64 Gigahertz.

In accordance with an embodiment of the present invention, at least one integrated access and backhaul module 102 includes the access interface 108. In particular, the access interface 108 provides a plurality of methods to a plurality of users for network connectivity. The plurality of methods used to provide the network connectivity to the plurality of users includes 2G, 3G, 4G, 5G-NR, Wifi, IoT and the like.

In accordance with an embodiment of the present invention, the access network is a communication network which connects users to network service providers directly. In addition, the access network is opposite to the core network. Further, the access network allows the users to interact with communications systems to initiate user data transfer. Furthermore, the access network operates within a distance range of up to 100 meters.

In accordance with an embodiment of the present invention, at least one integrated access and backhaul module 102 includes the switch fabric 110. In particular, the switch fabric 110 transfers data between the first backhaul interface 104, the second backhaul interface 106, and the access interface 108 in real-time. In general, switched fabric is a network topology where network nodes interconnect through crossbar switches. The switch fabric 110 is used to form efficient mesh topology.

Additionally, the switch fabric 110 manages the data within the first backhaul interface 104, the second backhaul interface 106, and the access interface 108 in real-time.

In accordance with an embodiment of the present invention, the integrated wireless access backhaul device 100 includes a power control unit. In particular, the power control unit is configured to control transmission power of the first backhaul interface 104 and the second backhaul interface 106 based on traffic load at the first backhaul interface 104 and the second backhaul interface 106.

In accordance with an embodiment of the present invention, the integrated wireless access backhaul device 100 provides a high bandwidth intelligent backhaul transportation by combining the at least one optical wireless communication link and the at least one V-band link of the integrated wireless access backhaul device 100 with another integrated wireless access backhaul device. In particular, the combination of at least one optical wireless communication link and at least one V-band link enables creation of the mesh network of multiple communication links.

In accordance with an embodiment of the present invention, the mesh network is configured to provide high bandwidth using the multiple communication links for intelligent backhaul transportation.

In accordance with an embodiment of the present invention, the integrated wireless access backhaul device 100 enables an intelligent load balancing over the first backhaul interface 104 and the second backhaul interface 106. In particular, the intelligent load balancing facilitates switching of the traffic load over the first backhaul interface 104 and the second backhaul interface 106 based on bandwidth availability.

In accordance with an embodiment of the present invention, the integrated wireless access backhaul device 100 performs one or more actions. In particular, the one or more operations include selecting an optimized interface, and the optimized interface has a high bandwidth availability and a low interference link for traffic transmission, combining the first backhaul interface 104 the second backhaul interface 106 and the access interface 108 for high throughput, sending a prioritized traffic on the optimized interface, managing a real-time traffic through switching a traffic load over the first backhaul interface 104, the second backhaul interface 106 and the access interface 108 and duplicating the prioritized traffic over the first backhaul interface 104 and the second backhaul interface 106 by transmitting the prioritized traffic on both the interfaces simultaneously.

In accordance with an embodiment of the present invention, the integrated wireless access backhaul device 100 may sense a receiving module in a field of view of the first backhaul interface 104 and the second backhaul interface 106 using directional beam steering, where beam steering is about changing the direction of the main lobe of a radiation pattern.

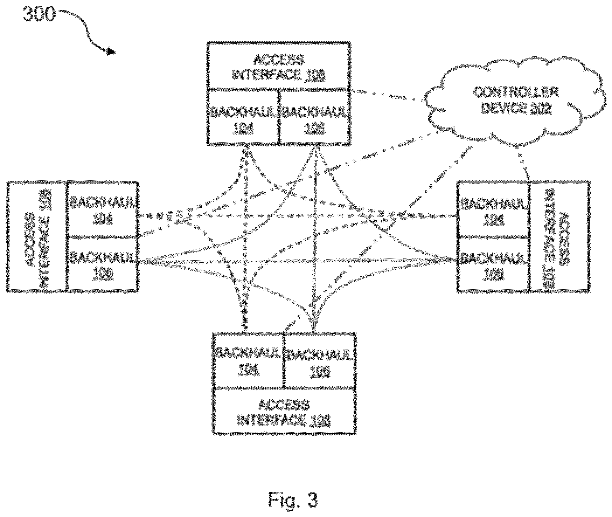

In accordance with an embodiment of the present invention, Additionally, the integrated wireless access backhaul device 100 comprises a controlling device 302 (as illustrated in Fig. 3) for providing real-time traffic management in the mesh network of a plurality of integrated wireless access backhaul devices.

In an implementation, the mesh network connects the plurality of integrated wireless access backhaul devices. And, each of the plurality of integrated wireless access backhaul devices provides the first backhaul interface 104, the second backhaul interface 106, the access interface 108 and the switch fabric 110 to transfer the data between the first backhaul interface 104, the second backhaul interface 106 and the access interface 108. Moreover, the first backhaul interface 104 uses at least one optical wireless communication link and the second backhaul interface 106 uses at least one V-band link.

In accordance with an embodiment of the present invention, the mesh network additionally includes a first plurality of links, a second plurality of links and a third plurality of links. Particularly, the first plurality of links connects the first backhaul interface 104 of each of the plurality of integrated wireless access backhaul devices with each other. Moreover, the second plurality of links connects the second backhaul interface 106 of each of the plurality of integrated wireless access backhaul devices with each other. Further, the third plurality of links connects each of the plurality of integrated wireless access backhaul devices with the controlling device 302.

In accordance with an embodiment of the present invention, the mesh network creates a plurality of integrated access and backhaul (IAB) nodes enabling one or more radio access technologies. In particular, the mesh network may include a link bonding module (not shown) configured to combine at least two links from the first plurality of links, the second plurality of links and the third plurality of links for efficient traffic handling.

In accordance with an embodiment of the present invention, the integrated wireless access backhaul device 100 utilizes a combination of the mesh network and the link bonding module to create a cluster of multi-Radio Access Technology (RAT) node elements which may be auto provisioned, self-configured with intelligent traffic steering and using load balancing.

In accordance with an embodiment of the present invention, the each of the plurality of IAB nodes has to determine the field of view within transmission coverage prior to establishing the mesh network. For the first backhaul interface 104, each of the plurality of IAB nodes may transmit beacons at pre-designated intervals.

Additionally, based on responses from other IAB nodes within the field of view corresponding IAB nodes may ascertain neighbor and rank the neighbors based on the quality of a plurality of signals received.

In accordance with an embodiment of the present invention, for the second backhaul interface 106, multiple reference signals may be transmitted with a certain interval. Each of the reference signals may be identified by a unique index; are indexes that help maintain data integrity by ensuring that no two rows of data in a table have identical key values and may be transmitted through a specific beam radiated in a specific direction. Subsequently various neighboring IAB nodes may be located at various places around the integrated wireless access backhaul device 100 of interest, each of the neighboring IAB nodes within the field of view may receive a specific reference signal with the unique index.

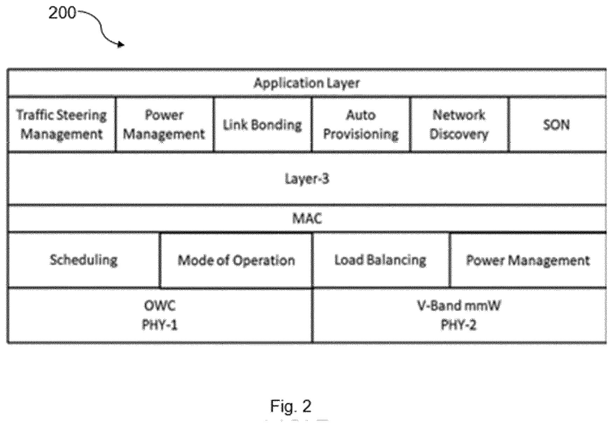

Fig. 2 is a pictorial representation illustrating a layered architecture of the integrated wireless access backhaul device in accordance with an embodiment of the present invention. The layered architecture 200 includes a media access control (MAC) layer, a network layer (hereinafter referred to as "Layer-3") and an application layer. Additionally, the layered architecture 200 includes a first physical layer (hereinafter referred to as "PHY-1") of the at least one optical wireless communication link and a second physical layer (hereinafter referred to as "PHY-2") of the at least one V-band link.

In accordance with an embodiment of the present invention, the application layer is responsible for performing a first set of operations. The first set of operations includes traffic steering management, power management, link bonding, auto provisioning, network discovery, self-organizing networks (hereinafter referred to as "SON") and the like.

In accordance with an embodiment of the present invention, at least one integrated access and backhaul module 102 implies the traffic steering management at the application layer to meet carrier grade reliability requirements. The traffic steering management enables standardization of the process of classifying an incoming traffic generated from a core network to multiple classes in a range of about 0 to 7. Additionally, at least one integrated access and backhaul module 102 may leverage the traffic steering management to prioritize the incoming traffic based on at least one external metric. At least one external metric includes available bandwidth, latency, packet loss, environment conditions, and the like.

The traffic steering management enables assignment of the incoming traffic in one or more quality of service enabled queues and mapping the one or more quality of service enabled queues to either the PHY-1 or the PHY-2. The performance of the one or more operations is associated with a plurality of parameters while satisfying quality of service constraints. The plurality of parameters includes transmission power, bandwidth, sub-channel assignment, bit-loading and type of one or more radio access technologies.

In accordance with an embodiment of the present invention, at least one integrated access and backhaul module 102 may initiate the power management at the application layer using the power control unit. The power control unit is configured to control the transmission power of the first backhaul interface 104 and the second backhaul interface 106 based on the traffic load at the first backhaul interface 104 and the second backhaul interface 106.

In accordance with an embodiment of the present invention, at least one integrated access and backhaul module 102 may trigger the link bonding at the application layer using the link bonding module. In particular, the link bonding module is configured to combine the at least two links from the first plurality of links, the second plurality of links and the third plurality of links for efficient traffic handling. If there may be high possibility to have availability of the plurality of aggregation links to connect a slave to the core network through multiple layers and through multiple masters, then at least one integrated access and backhaul module 102 triggers the link bonding at gateway prior to the core network connectivity.

Additionally, identification of the slave in the field of view of the first backhaul interface 104 and the second backhaul interface 106 may provide available links details which then may be used by various algorithms. In an example, the various algorithms include algorithms for the load balancing, the traffic steering management, mode of operation and Quality of Service (QoS) to decide the traffic distribution among multiple available backhaul layers which again would be controlled centrally through the controlled device 302.

Alternatively, if the traffic load of an IAB node cannot be handled by one point-to-point link between two nodes, bonding the at least two links of the first plurality of links and the second plurality of links originating from the plurality of integrated access and backhaul nodes for balancing the traffic load over a plurality of paths terminating at the core network.

The at least one integrated access and backhaul module 102 may trigger the auto provisioning at the application layer. The auto provisioning enables at least one integrated access and backhaul module 102 to automatically connect with the network management system without manual intervention. The auto provisioning includes identifying the plurality of integrated access and backhaul devices that lie under the field of view through a scanning mechanism. The identification of the plurality of integrated access and backhaul devices lying under the field of view enables to lock backhaul layer with a directional beam.

The auto provisioning enables few MAC layer features such as power control and automatic modulation and coding to control RF power variation at an initial stage. The auto provisioning configures the plurality of aggregation links at an optimal working performance. Additionally, once available links from the plurality of aggregation links are registered on master node, the slave sends a predefined standard message to the network management system. The network management system contains at least one location, media access control (MAC) address, supported access technology and the like that enables acquaintance between the slave and the network management system. The network management system pushes device configuration parameters consisting at least one of power, band, channel, technology and the like to operate the access layer in the location.

The auto provisioning enables classification of the plurality of integrated wireless access backhaul devices with master and slave configuration. Additionally, the auto provisioning lists and sorts the plurality of paths using a pre-configured tunnel destination internet protocol (IP) to terminate to the core network. The auto provisioning enables selective registration of the plurality of integrated wireless access backhaul devices based on priority and route decision.

The SON implies multiple functionalities in a heterogeneous network environment, such as self-optimization, self-healing, self-configuration, dynamic mesh functionality and cluster optimization techniques. Since the access interface 108 may be 4G/5G/Wi-Fi and at least one backhaul interface may be OWC and V-Band layer. Therefore, the SON enables the access interface 108 to support any backhaul layer on a real time basis.

The MAC layer is responsible for performing a second set of operations. The second set of operations includes scheduling, mode of operation, the load balancing, power management and the like.

The both backhaul interfaces operate at different bands, namely OWC and V Band, there will be no interference among either of backhaul interfaces. Therefore, the first backhaul interface 104 and the second backhaul interface 106 may be utilized simultaneously and provide higher throughput than that provided by either of backhaul interfaces in standalone mode. In an implementation, the load balancing corresponds to a cross-layer load balancing method that considers physical layer attributes such as signal-to-interference-noise ratio (SINR) to calculate throughput, use of one or more predictive artificial intelligence based algorithms utilizes the link availability and payload traffic. Additionally, the load balancing operates on the mode of operation.

In accordance with an embodiment of the present invention, the integrated wireless access backhaul device 100 runs the one or more predictive artificial intelligence based algorithms on the controlling device 300 based on a historical trend data and a historical environment data. Number of the modes of operation is four. Alternatively, the number of the mode of operation may vary. The mode of operation includes at least one of an optimised speed fusion mode, an adaptive mode, a redundant mode and a single technology mode.

The optimised speed fusion mode enables the first plurality of links and the second plurality of links to operate independently with maximum capacity using priority intelligence. Additionally, the MAC layer calculates air interface speed of each of the first plurality of links and the second plurality of links and adaptively selects either of the first backhaul interface 104 or the second backhaul interface 106 based on priority intelligence and the SINR of the receiving module. In an example, if an OWC link has more capacity as V-band is affected by rain, the MAC layer sends more traffic towards the OWC link.

The adaptive mode facilitates classification of the incoming traffic and prioritization of the incoming traffic across the plurality of aggregation links. Additionally, the adaptive mode enables duplication of the prioritized traffic over the first backhaul interface 104 and the second backhaul interface 106 by transmitting the prioritized traffic on both the interfaces simultaneously.

The redundant mode enables the plurality of IAB nodes to increase reliability of backhaul communication by maintaining at least one of the plurality of aggregation links as a backup for ingoing transmission. The at least one of the plurality of aggregation links having an optimal SINR and/or least traffic load for the ongoing transmission is selected for a primary backup link. Otherwise, if permitted within allowable capacity, another interface will be assigned as a redundant link to be activated if the primary link breakdowns. The single technology mode is used when IAB nodes contain an OWC backhaul interface only. Additionally, the single technology mode allows the IAB node having the OWC backhaul interface only to connect to other IAB nodes and form the mesh network.

Advantageously, providing high throughput and helps attaining up to 2Gbps of link capacity in the backhaul for distances up to 1km. The presence of RF and OWC links provides the flexibility to use either one or both based on the traffic and channel conditions, thereby providing higher overall throughput and reliability. In other words, a link can be always kept active despite unfavourable weather conditions. Further, reactive adaptation of parameters based on prevailing conditions, and AI enabled predictive adaptation based on historic data allows optimal performance under all conditions. The mesh connectivity (multi-point) feature of the IAB solution allows a slave device to reach the core over multiple paths. In other words, if a primary link fails, the device can switch to the secondary link. The overall network traffic can be balanced by bonding multiple OWC/V-band links to multiple IAB nodes and later aggregating at the core. Being a Plug and Play device, it has auto provision, self-configuration, self-healing functionalities.

Fig. 3 is a pictorial representation illustrating a first exemplary mesh network to connect a plurality of integrated wireless access backhaul device in accordance with an embodiment of the present invention. The first exemplary mesh network 300 includes the plurality of integrated wireless access backhaul devices and the controlling device 302. In particular, the plurality of integrated wireless access backhaul devices corresponds to multiple integrated wireless access backhaul devices of Fig. 1. And, each of the plurality of integrated wireless access backhaul devices includes at least one backhaul interface, the access interface 108 and a switch fabric 110 to transfer the data between the at least one backhaul interface and the access interface 108. Moreover, each of the plurality of integrated wireless access backhaul devices is connected with each other through the mesh network.

In the first exemplary mesh network 300, the number of the plurality of integrated wireless access backhaul devices is 4.

Alternatively in another exemplary mesh network, the number of the plurality of integrated wireless access backhaul devices may vary.

In the first exemplary mesh network 300, each of the plurality of IAB nodes illustrates 6 possible connections to other IAB nodes consisting of OWC and OWC interfaces forming two mesh networks of OWC and OWC links. The load traffic of the integrated wireless access backhaul device may be distributed/combined among these possible different links. The link establishment is orchestrated by the controlling device 302.

In the first exemplary mesh network 300, one of the plurality of IAB nodes having the first backhaul interface 104 only may form up to 3 possible connections to other IAB nodes.

In accordance with an embodiment of the present invention, the controlling device 302 includes a plurality of aggregation links, the receiving module, and a controlling module. Each of the plurality of aggregation links connects the controlling device 302 with each of the plurality of integrated wireless access backhaul devices. In particular, the receiving module configured to receive information associated with traffic from each of the plurality of integrated wireless access backhaul devices. And, the controlling module configured to monitor an incoming traffic and mapping the incoming traffic to at least one backhaul interface based on received information associated with the traffic.

In accordance with an embodiment of the present invention, the controlling device 302 also includes a connection module configured for automatically connecting the controlling device 302 with a network management system. Particularly, the controlling device 302 includes two backhaul interfaces and a load balancing module configured for balancing the traffic load between the two backhaul interfaces.

In accordance with an embodiment of the present invention, the controlling device 302 corresponds to an intelligent cloud controller.

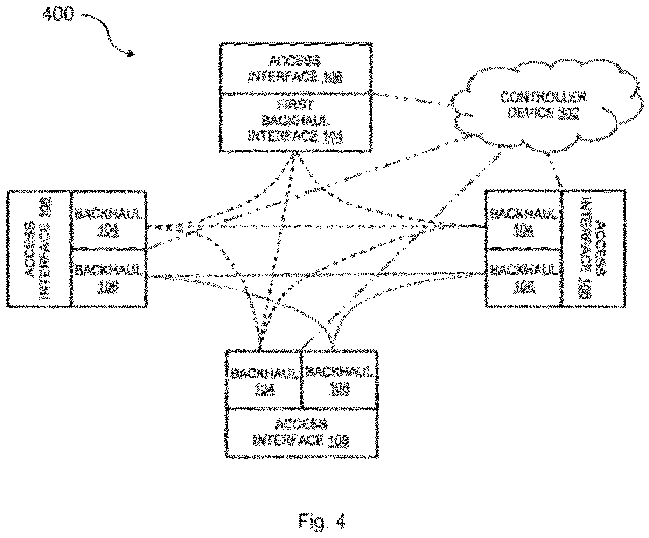

Fig. 4 is a pictorial representation illustrating a second exemplary mesh network to connect the plurality of integrated wireless access backhaul device in accordance with an embodiment of the present invention. In particular, the second exemplary mesh network 400 includes the plurality of integrated wireless access backhaul devices and the controlling device 302. Additionally, one of the integrated wireless access backhaul devices has the first backhaul interface 104 and the access interface 108.

In accordance with an embodiment of the present invention, other integrated wireless access backhaul devices have the first backhaul interface 104, the second backhaul interface 106 and the access interface 108.

In the second exemplary mesh network 400, the number of the plurality of integrated wireless access backhaul devices is 4. Alternatively, the number of the plurality of integrated wireless access backhaul devices may vary.

In accordance with an embodiment of the present invention, the controlling device 302 includes the plurality of aggregation links, the receiving module, and the controlling module. Each of the plurality of aggregation links connects the controlling device 302 with each of the plurality of integrated wireless access backhaul devices.

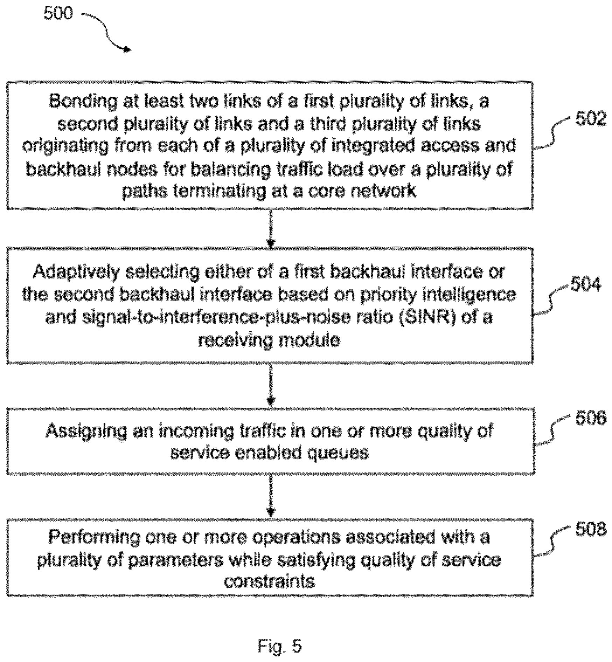

FIG. 5 is a flow-chart illustrating a method for providing real-time traffic management in a mesh network of a plurality of integrated wireless access backhaul device in accordance with an embodiment of the present invention.

The method 500 stars at step 502. At step 502, at least two links of the first plurality of links, the second plurality of links and the third plurality of links originating from each of the plurality of integrated access are bonded with the backhaul nodes for balancing traffic load over the plurality of paths terminating at the core network.

Step 502 proceeds to step 504. At step 504, either of the first backhaul interface 104 or the second backhaul interface 106 is adaptively selected based on priority intelligence and signal-to-interference-plus-noise ratio (SINR) of the receiving module.

Step 504 proceeds to step 506. At step 506, the incoming traffic is assigned in the one or more quality of service enabled queues.

Step 504 proceeds to step 506. At step 508, the one or more actions associated with the plurality of parameters are performed while satisfying quality of service constraints. The plurality of parameters includes transmission power, bandwidth, sub-channel assignment, bit-loading and type of one or more radio access technologies.

In accordance with an embodiment of the present invention, the method comprises controlling transmission power of the first backhaul interface 104 and the second backhaul interface 106 based on the traffic load at the first backhaul interface 104 and the second backhaul interface 106 for controlling excess radiation and thereby reducing interference.

In accordance with an embodiment of the present invention, the plurality of parameters comprising transmission power, bandwidth, sub-channel assignment, bit-loading and type of one or more radio access technologies.

In accordance with an embodiment of the present invention, the method is operably configured to perform one or more actions from selecting an optimized interface, and the optimized interface has a high bandwidth availability and a low interference link for traffic transmission, combining the first backhaul interface 104 the second backhaul interface 106 and the access interface 108 for high throughput, sending a prioritized traffic on the optimized interface, managing a real-time traffic through switching a traffic load over the first backhaul interface 104, the second backhaul interface 106 and the access interface 108 and duplicating the prioritized traffic over the first backhaul interface 104 and the second backhaul interface 106 by transmitting the prioritized traffic on both the interfaces simultaneously.

In accordance with an embodiment of the present invention, the method comprises enabling an intelligent load balancing over the first backhaul interface 104 and the second backhaul interface 106 to facilitate switching of traffic load over the first backhaul interface 104 and the second backhaul interface 106 based on bandwidth availability.

The various actions, acts, blocks, steps, or the like in the flow chart 500 may be performed in the order presented, in a different order or simultaneously. Further, in some implementations, some of the actions, acts, blocks, steps, or the like may be omitted, added, modified, skipped, or the like without departing from the scope of the invention.

The present invention of providing an integrated wireless access backhaul device 100 for network densification using a mesh network has advantages such as effectively attaining high throughput in a backhaul and allowing optimal performance using artificial intelligence enabled predictive adaptation.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the invention will be apparent to those skilled in the art from consideration of the specification and practice of the invention. While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above-described embodiment, method, and examples, but by all embodiments and methods within the scope of the invention. It is intended that the specification and examples be considered as exemplary, with the true scope of the invention being indicated by the claims.

It is to be understood that the terms so used are interchangeable under appropriate circumstances and embodiments of the invention are capable of operating according to the present invention in other sequences, or in orientations different from the one(s) described or illustrated above.

## Claims

1. An integrated wireless access backhaul device (100) for network densification using a mesh network, **characterized in that**:
at least one integrated access and backhaul module (102), wherein the at least one integrated access and backhaul module (102) further comprises:
a first backhaul interface (104) using at least one optical wireless communication link, wherein the at least one optical wireless communication link comprising one or more of a free space communication, wireless point to point communication and satellite communication;
a second backhaul interface (106) using at least one V-band link;
an access interface (108), wherein the access interface (108) provides at least one radio link to a plurality of user equipment; and
a switch fabric (110), wherein the switch fabric (110) transfers data between the first backhaul interface (104), the second backhaul interface (106) and the access interface (108).

2. The integrated wireless access backhaul device (100) as claimed in claim 1, wherein the switch fabric (110) is operably configured to transfer data between the first backhaul interface (104), the second backhaul interface (106) and the access interface (108) in a real-time.

3. The integrated wireless access backhaul device (100) as claimed in claim 1 or 2, wherein the integrated wireless access backhaul device (100) further comprises a power control unit operably configured to control transmission power of the first backhaul interface (104) and the second backhaul interface (106) based on traffic load at the first backhaul interface (104) and the second backhaul interface (106).

4. The integrated wireless access backhaul device (100) as claimed in any preceding claim, wherein the integrated wireless access backhaul device (100) combines the at least one optical wireless communication link and the at least one V-band link of the integrated wireless access backhaul device (100) with another integrated wireless access backhaul device for creating the mesh network of multiple communication links and wherein the mesh network is operably configured to provide a high bandwidth intelligent backhaul transportation.

5. The integrated wireless access backhaul device (100) as claimed in any preceding claim, wherein the integrated wireless access backhaul device (100) is configured to enable an intelligent load balancing over the first backhaul interface (104) and the second backhaul interface (106) and wherein the intelligent load balancing facilitates switching of traffic load over the first backhaul interface (104) and the second backhaul interface (106) based on bandwidth availability.

6. The integrated wireless access backhaul device (100) as claimed in any preceding claim, wherein the integrated wireless access backhaul device (100) performs at least one of following actions:
selecting an optimized interface, and the optimized interface has a high bandwidth availability and a low interference link for traffic transmission;
combining the first backhaul interface (104), the second backhaul interface (106) and the access interface (108) for high throughput;
sending a prioritized traffic on the optimized interface;
managing a real-time traffic through switching a traffic load over the first backhaul interface (104), the second backhaul interface (106) and the access interface (108); and
duplicating the prioritized traffic over the first backhaul interface (104) and the second backhaul interface (106) by transmitting the prioritized traffic on both interfaces simultaneously.

7. A controlling device (302) for providing a real-time traffic management in a mesh network of a plurality of integrated wireless access backhaul devices is connected with each other through the mesh network, and wherein each of the plurality of integrated wireless access backhaul devices further comprises at least one backhaul interface, an access interface (108) and a switch fabric (110) for transferring data between the at least one backhaul interface and the access interface (108) and the controlling device (302) is **characterized by**:
a plurality of aggregation links, wherein each of the plurality of aggregation links connects the controlling device (302) with each of the plurality of integrated wireless access backhaul devices;
a receiving module configured for receiving information associated with traffic from each of the plurality of integrated wireless access backhaul devices; and
a controlling module configured for monitoring an incoming traffic and mapping the incoming traffic to the at least one backhaul interface based on received information associated with the traffic.

8. The controlling device (302) as claimed in claim 7, wherein the controlling device (302) further comprises:
a connection module configured for automatically connecting the controlling device (302) with a network management system; and/or
two backhaul interfaces; and/or
a load balancing module configured for balancing traffic load between the two backhaul interfaces.

9. A mesh network for connecting a plurality of integrated wireless access backhaul devices, wherein each of the plurality of integrated wireless access backhaul devices provides a first backhaul interface (104), a second backhaul interface (106), an access network (108) and a switch fabric (110) for transferring data between the first backhaul interface (104), the second backhaul interface (106) and the access interface (108), wherein the first backhaul interface (104) uses at least one optical wireless communication link and the second backhaul interface (106) uses at least one V-band link, and the mesh network is **characterized by**:
a first plurality of links for connecting the first backhaul interface (104) of each of the plurality of integrated wireless access backhaul devices with each other;
a second plurality of links for connecting the second backhaul interface (106) of each of the plurality of integrated wireless access backhaul devices with each other; and
a third plurality of links for connecting each of the plurality of integrated wireless access backhaul devices with a controlling device (302),
wherein the mesh network creates a plurality of integrated access and backhaul nodes enabling one or more radio access technologies.

10. The mesh network as claimed in claim 9, wherein the mesh network further comprising a link bonding module configured for combining at least two links from the first plurality of links, the second plurality of links and the third plurality of links for efficient traffic handling.

11. A method for providing a real-time traffic management in a mesh network of a plurality of integrated wireless access backhaul devices, **characterized by** following steps:
bonding at least two links of a first plurality of links, a second plurality of links and a third plurality of links originating from each of a plurality of integrated access and backhaul nodes for balancing traffic load over a plurality of paths terminating at a core network;
adaptively selecting either of a first backhaul interface (104) or a second backhaul interface (106) based on priority intelligence and signal-to-interference-plus-noise ratio (SINR) of a receiving module;
assigning an incoming traffic in one or more quality of service enabled queues; and
performing one or more actions associated with a plurality of parameters while satisfying quality of service constraints.

12. The method as claimed in claim 11, wherein the method comprises controlling transmission power of the first backhaul interface (104) and the second backhaul interface (106) based on the traffic load at the first backhaul interface (104) and the second backhaul interface (106) for controlling excess radiation and thereby reducing interference.

13. The method as claimed in claim 11 or claim 12, wherein the plurality of parameters comprising transmission power, bandwidth, sub-channel assignment, bit-loading and type of one or more radio access technologies.

14. The method as claimed in claim 11 to 13, wherein the method is operably configured to perform one or more actions:
selecting an optimized interface, wherein the optimized interface has high bandwidth availability and low interference link for traffic transmission;
combining the first backhaul interface (104), the second backhaul interface (106) and an access interface (108) for high throughput;
sending a prioritized traffic on the optimized interface;
the real-time traffic management through switching the traffic load over the first backhaul interface (104), the second backhaul interface (106), and the access interface (108); and
duplicating the prioritized traffic over the first backhaul interface (104) and the second backhaul interface (106) by transmitting the prioritized traffic on both interfaces simultaneously.

15. The method as claimed in claim 11 to 14, wherein the method comprises enabling an intelligent load balancing over the first backhaul interface (104) and the second backhaul interface (106) to facilitate switching of traffic load over the first backhaul interface (104) and the second backhaul interface (106) based on bandwidth availability.
